# EUROPEAN PATENT APPLICATION

(11) **EP 1 010 578 A2**
(43) Date of publication of application: **21.06.2000**
(21) Application number: 99125266.9
(22) Date of filing: 17.12.1999
(51) Int. Cl.: B60Q 1/26

(54) **Automobile lamp**

(30) Priority: 18.12.1998 JP 36086698
(71) Applicant: Stanley Electric Co., Ltd., Meguro-ku Tokyo 153-8636 (JP)
(72) Inventor: Yamada, Tetsuo, Yokohama-shi, Kanagawa, 222-0001 (JP); Ohmachi, Hisashi, Choufu-shi, Tokyo, 182-0003 (JP)
(74) Representative: Geyer, Ulrich F., Dr. Dipl.-Phys.

(57) **Abstract**

An automobile lamp (1) is disclosed that includes a plurality of light sources (2) on the printed wiring board (2a), the first reflection surface (4) reflecting the light from the light source to the light emitting surface of the automobile lamp (1), and the second reflection surface (5) reflecting the light reflected from the first reflection surface (4) to the illuminating direction of the automobile lamp (1). The light from the light source of the automobile lamp (1) has the strong light directivity and does not have uniform brightness in the conventional embodiments. However in this invention, the light emitting surface of the automobile lamp (1) shines uniformly by the first and the second reflection surface(4 and 5), and only appropriate number of the light sources (2) is required.

## Description

### BACKGROUND OF THE INVENTION

### Field of the Invention

This invention relates to an automobile lamp used as a tail lamp or the like. The invention also relates to a signal lamp and more particularly to a directional signal lamp for an automobile. The automobile lamp uses several light sources, for example LED lamps (LED lamp bulbs) or the like, which need small amounts of electric power.

### Discussion of the Related Art

Fig.5 illustrates a conventional automobile lamp 90 whose light source is a plurality of LED lamps 91. The LED lamps 91 are mounted on a printed wiring board 92 in a housing 93. The light emitting direction of the LED lamps 91 corresponds to the illuminating direction of the automobile lamp 90. The LED lamps 91 are covered by an outer lens 94 which has a lens cut 94a on the inner surface of the outer lens 94.

The illuminated light rays of the LED lamps 91 are beam-formed luminous fluxes. The area of the outer lens 94 which is able to be illuminated by one LED lamp 91 is comparatively small. Accordingly, a plurality of the LED lamps 91 are required to be mounted to realize the uniform illumination of the surface of the outer lens 94.

If the outer lens 94 is curved to fit for the design of an automobile body, the distances between the LED lamps 91 and outer lens 94 are different in relation to each other when the LED lamps 91 are mounted on a surface of the printed wiring board 92. Accordingly, the areas of the outer lens 94 illuminated by the LED lamps 91 are different in relation to each other. To overcome this problem, a plurality of printed wiring boards 92 may be attached in the automobile lamp 90 in a broken line form or in a form of stairs to mount the LED lamps 91 having same distance to the outer lens 94.

With said lamp design, firstly, the problem of higher cost may occur by the increased number of the LED lamps 91 required for the conventional automobile lamp 90. Since the light emitted by the LED lamp 91 is in beamed form, the illuminated area of the outer lens 94 becomes narrow. Accordingly, in order to illuminate the outer lens 94 uniformly, the plurality of LED lamps 91 are required. This may cause higher costs due to the increased number of the LED lamps 91.

Secondly, when the surface of the outer lens 94 is curved, the disposition of the printed wiring board 92 is difficult to determine. Accordingly, since the attachment position of the printed wiring board 92 to the inner side of the outer lens 94 is not uniform, the light distribution patterns of the automobile lamps 90 may be different in regards to each other. Furthermore, the quality of the automobile lamp 90 may be decreased due to not meeting the requirements of the light distribution patterns.

### SUMMARY OF THE INVENTION

The invention is directed to an automobile lamp that substantially obviates one or more of the above problems due to the limitations and disadvantages of the conventional automobile lamps.

It is an object of the present invention to be able to provide an automobile lamp which requires less number of lamps (lamp bulbs) than that of the conventional automobile lamp, and wherein the efficiency of light illumination is improved. To this end, the invention provides a first reflection surface and a second reflection surface of the automobile lamp. In addition, it is an object to provide an automobile lamp having great efficiency based on the consumption of electrical power, cost, and the better performance as a lamp.

It is another object of the invention to form a headlamp which has an enlarged illuminating direction due to the first reflection surface and the second reflection surface. Since those surfaces have the appropriate diffusing disposition, the illuminating angles of the LED lamps are enlarged. Accordingly, the light from the light emitting surface of the automobile lamp looks uniform.

According to the present invention, the above objects are achieved by providing an automobile lamp comprising a plurality of lamps on a printed wiring board, the first reflection surface reflecting the light from the light source to the light emitting surface of the automobile lamp and the second reflection surface reflecting the light from the first reflection surface to the illuminating direction of the automobile lamp.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to describe the principles of the invention.
Fig. 1 is a cross-sectional view of an automobile lamp according to the first preferred embodiment of the present invention.
Fig. 2 is a front-view of the automobile lamp of Fig 1 (on a reduced scale) without the extension according to the first preferred embodiment of the present invention.
Fig. 3 is a cross-sectional view of an automobile lamp according to the second preferred embodiment of the present invention.
Fig. 4 is a front-view of the automobile lamp according to the third preferred embodiment of the present invention.
Fig. 5 is a cross-sectional view of a conventional automobile lamp.

### DETAILED DESCRIPTION OF THE PREFERRED EMBODIMENTS

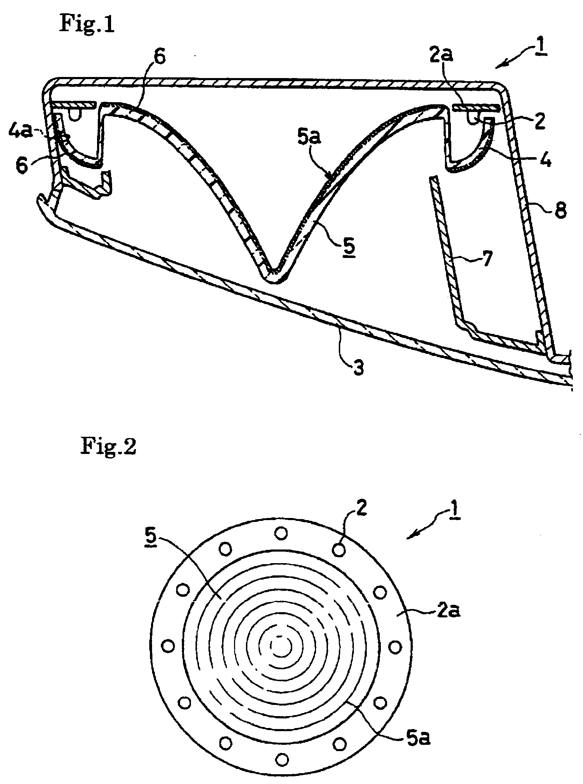

The preferred embodiments of the present invention will be described with reference to the drawings . A first embodiment of an automobile lamp 1 of the present invention is shown in Fig.1 and 2. The automobile lamp 1 in Fig. 1 and 2 comprises, similar to a conventional automobile lamp, LED bulbs or lamps 2 or the like, as the plurality of light sources for an automobile lamp; said LED lamps need comparatively little electric power.

In this first embodiment, a first reflection surface (means) 4 and a second reflection surface (means) 5 are formed in the automobile lamp 1. The plural LED lamps 2 are mounted on the printed wiring board 2a. A sufficient number of the LED lamps 2 which meet the requirement for the brightness of the automobile lamp 1 is disposed with the same spacing or interval along circumferences on the round-formed printed wiring board 2a.

The direction of mounting of the LED lamps 2 on the printed wiring board 2a is uniform in order to simplify the mounting; for example the bottoms of the LED lamps are attached very closely to the printed wiring board 2a. In addition, the number of the LED lamps 2 is sufficient to give the appropriate brightness to the automobile lamp 1.

The first reflection surface 4 covering the emitting side of the LED lamps 2 is attached to the printed wiring board 2a on which the LED lamps 2 are mounted. The second reflection surface 5 protrudes from the center portion of the printed wiring board 2a. The form of the board 2a looks like a doughnut. The first reflection surface 4 faces to the second reflection surface 5.

The desirable method of forming the first and the second reflection surfaces 4 and 5 is to mold both reflection surfaces 4 and 5 in a (single) body using transparent material or the like, and then to mount a reflection film 6 on the appropriate portions of said body to form the reflection surfaces 4 and 5. Metallic vacuum deposition and so on can be used to form said film 6.

In order to obtain a specific reflection quality, when molding both reflection surfaces 4 and 5, diffusing cut surfaces 4a and 5a (i.e. surfaces having prismatic units 4a, 5a for diffusing light rays) can be formed on the appropriate portion on the reflection surfaces 4 and 5. Accordingly the light from LED lamps 2 is reflected uniformly to the illuminating direction of the automobile lamp.

The automobile lamp 1 includes the first reflection surface 4 and the second reflection surface 5 and the LED lamps 2 mounted on the printed wiring board 2a. In addition, an extension 7 can be used to obtain a good appearance. Further, an outer lens 3 covering the front portion of the illuminating direction, and a housing 8 covering all of the lamp 1 with the outer lens 3 are comprising the automobile lamp 1.

When the required light distribution pattern is realized by forming the diffusing cut (4a and 5a) on both of the first reflection surface 4 and the second reflection surface 5 or on either one of the reflection surfaces 4 or 5, a lens cut or the like is not required for the outer lens 3. Accordingly, when seeing into the automobile lamp from outside of the automobile lamp 1, the form of the second reflection surface 5 makes a strong, i.e. high quality impression.

With regard to the function and the efficiency of the automobile lamp of this invention, the following is noted: firstly, the lights from the LED lamps 2 are able to diffuse and go to the illuminating angle by forming the first reflection surface 4 and the second reflection surface 5. Accordingly, the light from the LED lamps 2 can be diffused to illuminate a great (spatial) dimension and as a result, the least required number of LED lamps 2 for the appropriate brightness of the automobile lamp 1 can be used.

Secondly, the beam-formed light from the LED lamps 2 is directed and illuminated to the illuminating direction of the automobile lamp 1. The light is reflected by the first reflection surface 4 and the second reflection surface 5 which have an appropriate diffusing function. Since the light from the LED lamps 2 is appropriately diffused, the automobile lamp 1 looks uniformly bright, which was not realized in the conventional automobile lamp 90.

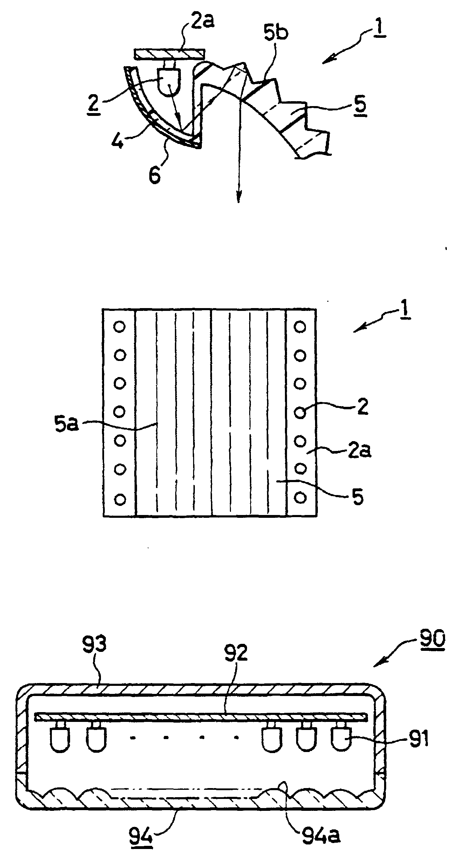

Fig. 3 is a second embodiment of the invention. As mentioned above, the second reflection surface 5 in the first embodiment has a diffusing cut or diffusing cut surface 5a similar to diffusing cut surface 4a of the first reflection surface 4. However in this second embodiment, in place of the diffusing cut 5a, the entire reflection cut 5b which makes entire reflection using the high refractive index of the material is used for the second reflection surface 5. Accordingly, without a reflection film 6, the second reflection surface 5 has an appropriate function.

The second reflection surface 5 is not colored with silver or the like. Accordingly, the appearance of the automobile lamp 1 depends on the angle of the looking the automobile lamp 1. The automobile lamp 1 looks having the entire reflection function from one angle or looks transparent from another angle. This appearance of the automobile lamp 1 are very innovative.

Fig. 4 illustrates the third embodiment of this invention. The automobile lamp 1 in Fig. 2 has the printed wiring board 2a on which the LED lamps 2 are mounted. The printed wiring board 2a is approximately doughnut shaped in the first embodiment of this invention. However , according to the invention, the form of the printed wiring board 2a is not limited to the form of a doughnut. According to the third embodiment two printed wiring boards 2a in the form of rectangle are disposed (see Fig 4) on both sides of the second reflection surface 5. Or, not shown, four printed wiring boards 2a in the form of rectangle or the like are disposed around the second reflection surface 5. Since the cross sectional view of the automobile lamp 1 of this third embodiment is not different from the first embodiment of Fig. 1, no figure of the cross sectional view of the third embodiment is drawn. This third embodiment releases the limitation of the front view which is in a doughnut form, and provides a printed wiring board 2a whose width is smaller than the conventional one.

The automobile lamp 1 of this invention comprises plural LED lamps or light sources 2 on a printed wiring board 2a, the first reflection surface 4 which reflects the light from the light sources 2 to the light emitting surface of the automobile lamp 1, and the second surface 5 which reflects the light from the first reflection surface 4 into the illuminating direction of the automobile lamp 1.

Accordingly, though the illuminating angle of the LED lamps are narrow, large number of LED lamps are not necessary, a certain number of LED lamps are required to an extent that it is sufficient for entirely emitting the light emitting surface of the automobile lamp. Unreasonably high intensity of luminous flux is not required to each LED lamp. The automobile lamp 1 of this invention has the great efficiency regarding the consumption of the electric power, cost, and the better performance as a lamp.

In addition, by having the light from the LED lamps 2 whose illuminating angle are narrow go through the first reflection surface 4 and the second reflection surface 5, illuminating direction of the automobile lamp 1 is enlarged. Since those surfaces have the appropriate diffusing disposition, the illuminating angle of the LED lamps 2 is enlarged. Accordingly the light from the light emitting surface of the automobile lamp 1 looks uniformly, and the automobile lamp 1 using the LED lamps 2 as light sources performs with great efficiency. I.e., since the light emitted from the LED lamps is diffused and reflected by the first and second reflection surfaces 4 and 5, large and uniform surface luminance of the automobile light 1 is achieved, although the illuminating angle of each LED lamp is narrow. With regard to "diffusing cuts" 4a and also 5a mentioned above, it is noted that the form of cuts is not limited to the forms as shown in the drawings.

The diffusing effect could also be obtained by applying a knurled finish to the reflection surfaces 4 and 5 or the surface of reflection film facing the reflection surfaces 4 and 5 .

Also, the difference between "diffusing cut surfaces 5a" of Fig. 1 and the "entire reflection cut 5b" of Fig. 3 can be explained as follows:

### Diffusing cut surface 5a

The reflected light by the diffusing cut 5a travels into various directions. The diffusing cut surface 5a is comprised of a plurality of prismatic cuts, each having different size, shape, and depth. Intervals among respective cuts are varied. The arrangement of respective prismatic cuts on the diffusing cut surface 5a is such that a plurality of prismatic cuts having the same form is arranged at predetermined intervals or two more kinds of prismatic cuts having different forms may be arranged at predetermined intervals. Additionally , the diffusing cut surface 5a can be provided in the form of a fish eye lens (sequence of hemispheres), although the diffusing cut surface 4a in Fig. 1 is not the fish-eye lens.

### Entire reflection cut 5b

The light reflected by the entire reflection cut 5b travels into an angle of 90 degrees relative to the light entering direction into the reflecting surface 5. The angle of the entire reflection cut is usually 90 degrees. Then reflected light is again reflected by the entire reflection cut 5b when the light goes out from the reflecting surface 5.

Further, when reflection surfaces 4 and 5 are formed by resin molding, the reflection film 6 is formed by metallic vacuum deposition. In addition, the reflection film 6 may be formed as a flat surface on the diffusing cuts 4a and 5a. In this case, air or another resin material which is different from the material for the reflection surfaces 4 and 5 exists between the reflection film 6 and diffusing cuts 4a and 5a.

It will be apparent to those skilled in the art that various modifications and variations can be made in the method for fabricating a lamp and lens constructions of the invention without departing from the spirit or scope of the invention. Thus, it is intended that the invention cover the modifications and variations of this invention provided they come within the scope of the appended claims and their equivalents.

## Claims

1. An automobile lamp (1), comprising:
a plurality of lamps (2) as light sources; and
a first reflection surface (4) reflecting the light from said plurality of lamps (2) to a light emitting surface of said automobile lamp (1); and
a second reflection surface (5) reflecting the light reflected by said first reflection surface (4) into the illuminating direction of said automobile lamp (1); and
an outer lens (3); and
a housing

2. The automobile lamp (1) of claim 1, wherein said plurality of lamps (2) acting as light sources are mounted on a printed wiring board (2a) formed preferably in a doughnut shape.

3. The automobile lamp (1) of claim 1 or 2, wherein said second reflection surface (5) protruding from a center portion of said first reflection surface (4).

4. The automobile lamp (1) of claim 1,2 or 3, wherein said first reflection surface (4) and said second reflection surface (5) are formed in a body using transparent material or the like.

5. The automobile lamp (1) of any of claims 1-4, wherein appropriate portions of either one or both of said first reflection surface (4) and said second reflection surface (5) are provided with a film by metallic vacuum deposition or the like (6).

6. The automobile lamp (1) of claim 1, wherein either one or both of said first reflection surface (4) and said second reflection surface (5) have light diffusing cuts (5a).

7. An automobile lamp (1), comprising:
a plurality of lamps (2) as light sources; and
a first reflection surface (4) reflecting the light from said plurality of lamps (2) as light sources to the light emitting surface; and
a second reflection surface (5) with an entire reflection cut (5b) reflecting the light reflected by said first reflection surface (4) to the illuminating direction of the automobile lamp (1); and
an outer lens (3); and
a housing

8. The automobile lamp (1) of claim 7, wherein said second reflection surface (5) has entire reflection cut (5b) which reflects light from said plurality of lamps (2) without a reflection film or the like.

9. The automobile lamp (1) of claim 1, wherein said plurality of lamps (2) as light sources are mounted on said printed wiring board (2a) in the form of two rectangles which are disposed on both ends of said second reflector (5).

10. The automobile lamp (1) of claim 1, wherein said plurality of lamps (2) as light sources are mounted on four of said printed wiring boards (2a) and form a rectangle which are disposed around every side of said second reflection surface (5).
